# EUROPÄISCHE PATENTSCHRIFT

(11) **EP 0 479 006 B1**
(45) Veröffentlichungstag und Bekanntmachung des Hinweises auf die Patenterteilung: **28.12.1994**
(21) Anmeldenummer: 91115438.3
(22) Anmeldetag: 12.09.1991
(51) Int. Cl.: B60N 2/26

(54) **Sitz für ein Fahrzeug**
Seat for a vehicle
Siège pour un véhicule

(30) Priorität: 22.09.1990 DE 4030110
(43) Veröffentlichungstag der Anmeldung: 08.04.1992
(73) Patentinhaber: Volkswagen Aktiengesellschaft, 38436 Wolfsburg (DE)
(72) Erfinder: Sinnhuber, Ruprecht, Dipl.-Ing., W-3170 Gifhorn (DE)

(56) Entgegenhaltungen:
- EP-A- 0 258 194
- DE-A- 2 825 329
- US-A- 4 555 135
- US-A- 4 664 443

## Beschreibung

Die Erfindung betrifft einen Sitz für ein Fahrzeug gemäß dem Oberbegriff des Patentanspruchs 1.

Gattungsgemäße Fahrzeugsitze sind beispielsweise bekannt aus der DE-C-2 803 574 und der DE-A-3 716 619. Die Sitzkissen derartiger Fahrzeugsitze weisen Sitzkissenteile auf, die durch entsprechende Betätigungen in eine Kinderrückhalteeinrichtung umwandelbar sind. Der besondere Vorteil eines solchen Fahrzeugsitzes ist darin zu sehen, daß auf dem gleichen Fahrzeugsitz wahlweise erwachsene Fahrzeuginsassen oder Kinder Platz nehmen können.

In der nicht vorveröffentlichten DE-A-4 022 438 wird ein Fahrzeugsitz beschrieben, bei
dem zur Umwandlung des Sitzes in eine Kinderrückhalteeinrichtung zwei Seitenteile um eine quer zum Sitz verlaufende Schwenkachse aus der Sitzkontur herausbewegbar sind. Zwischen den Seitenteilen ist ein Rückhalteelement angeordnet, das seinerseits um eine quer zum Sitz verlaufende Achse verdrehbar ist. Ein derartig ausgebildeter Sitz zeichnet sich dadurch aus, daß Kinder unterschiedlicher Altersstufen ohne Schwierigkeiten in der Kinderrückhalteeinrichtung untergebracht und auch wieder aus ihr entnommen werden können.

Gegen die oben beschriebenen Kinderrückhalteeinrichtungen erheben sich keinerlei sicherheitstechnische Bedenken. Allerdings besteht häufig bei dem das Fahrzeug lenkenden Elternteil des Kindes das Bedürfnis, zu dem in der Kinderrückhalteeinrichtung befindlichen Kind während der Fahrt direkten Blickkontakt aufnehmen zu können. Häufig ist es aber auch aus Komfortgründen für einen auf einer Rücksitzbank sitzenden Erwachsenen wünschenswert, das neben ihm in einer Rückhalteeinrichtung untergebrachte Kind ohne größere Verdrehungen des Kopfes vollständig im Sichtfeld zu haben.

In der DE-A-2 825 329 ist ein Sitz dargestellt, bei dem zur Umwandlung des Sitzes in einen Kindersitz das Rückenlehnenteil die Sitzfläche des Kindersitzes und das Sitzbankteil die entgegengesetzt zur Fahrtrichtung gerichtete Rückenlehne bildet. Auch in einer derartigen Rückhalteeinrichtung sitzt das Kind also entgegen der normalen Fahrtrichtung. Gerade unter räumlich beengten Verhältnissen ist allerdings die Umwandlung des in dieser Schrift beschriebenen Sitzes sehr problematisch, weil insbesondere für die Schwenkbewegungen des Sitzbankteils viel Platz benötigt wird.

Die verstellbarkeit einer Rückenlehne gegenüber dem Sitzkissen ist grundsätzlich bekannt aus der DE-A-3 608 828. Mittels einer Längsverschiebung der Rückenlehne kann mit einer dort näher beschriebenen Vorrichtung die Größe der nutzbaren Sitzfläche verändert werden, um so beispielsweise für unterschiedlich groß gewachsene Fahrzeuginsassen jeweils individuell günstige Sitzpositionen einstellen zu können. Die in dieser Schrift offenbarten, insgesamt 10 cm betragenden Verstellwege für die Rückenlehne beschränken sich somit auf den hinteren Bereich des Fahrzeugsitzes, lassen jedoch keine kindgerechte Umwandlung des Fahrzeugsitzes zu.

Aus der gattungsfremden EP-A-0 258 194 ist ein Sitz bekannt, in dem ebenfalls ein Kindersitz integriert ist. Der in seiner Ausgangsstellung in der Rückenlehne befindliche Kindersitz weist nach seiner Verstellung in die Gebrauchsposition die gleiche Orientierung wie der für den Erwachsenen hergerichtete Sitz auf. Für die Verstellung des Kindersitzes aus der Rückenlehne heraus ist eine Schienenanordnung vorgesehen, welche eine kombinierte Schwenk- und Schiebebewegung zuläßt.

Vor diesem Hintergrund liegt der Erfindung die Aufgabe zugrunde, gattungsgemäße Sitze so weiterzuentwickeln, daß sie ohne großen Betätigungsaufwand unter räumlich beengten Verhältnissen in Kinderrückhalteeinrichtungen umwandelbar sind, in denen Kinder im Vergleich zu einem normalerweise auf dem Sitz sitzenden Erwachsenen in umgekehrter Richtung sitzen.

Diese Aufgabe wird gelöst durch die Merkmale des Patentanspruchs 1. Die Unteransprüche enthalten zweckmäßige Weiterbildungen der Erfindung.

Ein besonderer Vorteil der Erfindung ist darin zu sehen, daß in der Normalstellung des Sitzes die Rückenlehne das zwischen den Seitenteilen angeordnete Rückhalteelement vollständig überdeckt. Auf diese Weise entstehen durch das Rückhalteelement für einen auf dem Sitz befindlichen Erwachsenen keinerlei Komforteinbußen im Sitzkissenbereich. Durch die Verschiebbarkeit der Rückenlehne läßt sich nicht nur für den Erwachsenen, sondern auch für das in der Rückhalteeinrichtung befindliche Kind den individuellen Bedürfnissen entsprechend eine optimale Oberschenkellänge einstellen.

In der Zeichnung ist ein besonders vorteilhaftes Ausführungsbeispiel der Erfindung dargestellt. Dabei zeigt in schematischer Darstellung
- Figur 1:: eine Draufsicht auf den in einer Ausgangsstellung befindlichen Sitz,
- Figur 2:: eine Seitenansicht des Sitzes gemäß Figur 1 und
- Figur 3:: den in einer Kinderrückhalteeinrichtung umgewandelten Sitz gemäß Figur 2.

In allen Figuren sind gleiche Bauteile gleich beziffert.

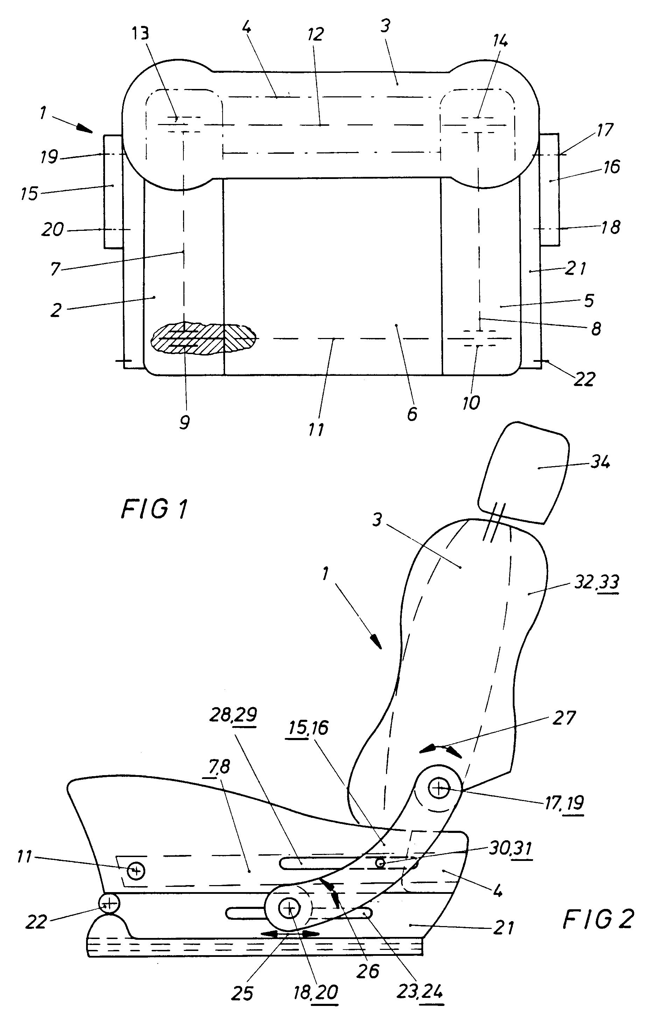

Man erkennt in Figur 1 einen erfindungsgemäßen Fahrzeugsitz 1, der im wesentlichen ein erstes Seitenteil 2, ein in dieser Darstellung von einer Rückenlehne 3 vollständig bedecktes Rückhalteelement 4 (strichpunktiert gezeichnet), ein zweites Seitenteil 5 sowie eine Restsitzfläche 6 aufweist. Innerhalb der Seitenteile 2, 5 sind Gelenkstangen 7 und 8 (gestrichelt gezeichnet) angeordnet, die mit Drehgelenken 9 und 10 über eine hier einteilig ausgeführte Schwenkachse 11 an einem in dieser Ansicht nicht sichtbaren Sitzbodenteil angelenkt sind. In dem Rückhalteelement 4 ist ein Träger 12 vorgesehen, der über Gelenke 13 und 14 mit den Gelenkstangen 7 und 8 verbunden ist. Das Rückhalteelement 4 ist um die durch den Träger 12 gebildete Achse drehbar und durch hier nicht weiter dargestellte Arretiervorrichtungen in vorgebbaren Drehstellungen arretierbar. Auch den Drehgelenken 9 und 10 sind Arretiervorrichtungen zugeordnet; auf deren Darstellung wird aber aus Gründen der Übersichtlichkeit hier ebenfalls verzichtet. Mittels zweier Schwingen 15 und 16 ist die Rückenlehne 3 über hier nur schematisch angedeutete Gelenkbeschäge 17 bis 20 an einem Sitzrahmen 21 angelenkt. Um eine quer zum Sitz verlaufende Achse 22 ist das gesamte mehrteilige Sitzkissen - bestehend aus den Seitenteilen 2, 5, dem Rückhalteelement 4 und der Restsitzfläche 6 - gegenüber dem Sitzrahmen 21 verschwenkbar.

Die Gestalt und die Anordnung der Schwingen 15, 16 wird durch Figur 2 näher erläutert. Die in dieser Ansicht nicht sichtbaren Bauelemente befinden sich in symmetrischer Anordnung auf der anderen Seite des Sitzes 1 und werden in der Zeichnung durch unterstrichene Ziffern angedeutet. Es wird deutlich, daß die Gelenkbeschläge 18, 20 in Langlöchern 23, 24 des Sitzrahmens 21 verschiebbar sind. Auf diese Weise ist die Rückenlehne 3 sowohl durch Schiebebewegungen gemäß Doppelpfeil 25 als auch durch Schwenkbewegungen gemäß Doppelpfeil 26 in ihrer relativen Position zum Sitzkissen verstellbar. Entsprechend dem Doppelpfeil 27 ist darüber hinaus noch die Lehnenneigung einstellbar. Beiderseits des Sitzkissens sind - aus Übersichtlichkeitsgründen ebenfalls nicht dargestellte - Tragplatten angeordnet, die jeweils Schiebekulissen 28, 29 aufweisen. In diese greifen mit den Schwingen 15 und 16 fest verbundene Bolzen 30, 31 ein. Für die Erfindung von besonderer Bedeutung sind auch noch Lehnenwangen 32, 33, die auf der Rückseite der Rückenlehne 3 angeordnet sind. Mit einer Kopfstütze 34 wird der Fahrzeugsitz 1 allen Ansprüchen an Komfort und Sicherheit gerecht. Der Vollständigkeit halber sei noch erwähnt, daß der gesamte Fahrzeugsitz 1 auf hier nicht dargestellten, aber als bekannt vorausgesetzten, Schienen auf dem Fahrzeugboden längs verschiebbar und durch entsprechende Neigungen der Schiene gegebenenfalls auch höhenverstellbar ist. Es sind grundsätzlich alle Gelenk- oder Schiebeverbindungen in den unterschiedlichsten Positionen entweder abgestuft oder stufenlos arretierbar. Auf eine detaillierte Darstellung derartiger Arretiervorrichtungen wird hier aber ebenfalls aus Übersichtlichkeitsgründen verzichtet.

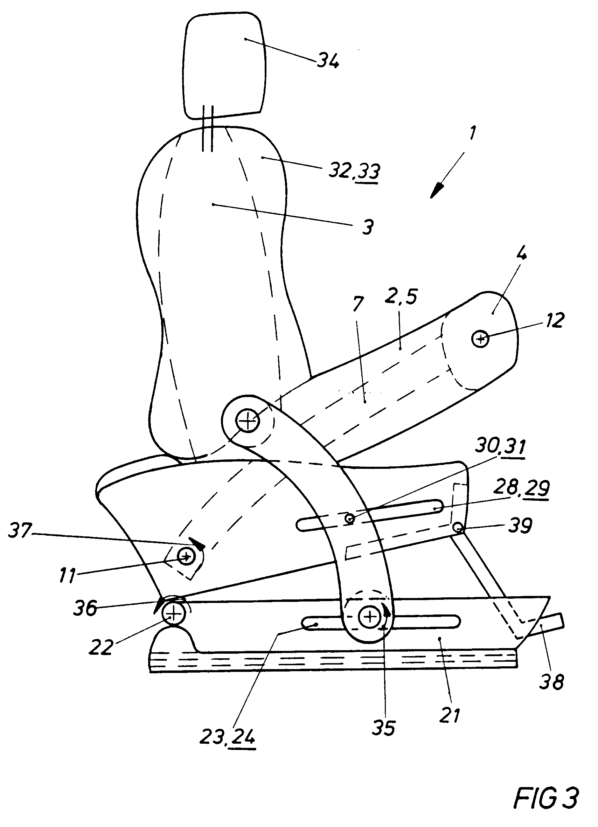

Anhand der Figur 3 wird nun die Umwandlung des Fahrzeugsitzes 1 in eine Rückhalteeinrichtung für Kinder näher erläutert. Nach Aufhebung der entsprechenden Arretierungen wird zunächst die Rückenlehne 3 um die Gelenkbeschläge 18, 20 in Richtung des Pfeiles 35 geschwenkt. Dabei nehmen die in den Schiebekulissen 28, 29 befindlichen Bolzen das Sitzkissen mit und verschwenken es in Pfeilrichtung 36 um die Achse 22 gegenüber dem Sitzrahmen 21. Das zunächst unter der Rückenlehne 3 liegende Rückhalteelement 4 ist nun frei zugänglich, so daß über die Gelenkstangen 7, 8 die Seitenteile 2, 5 durch eine Schwenkbewegung um die Achse 11 in Pfeilrichtung 37 aus der Sitzkontur heraus bewegbar sind. Durch Längsverschiebung der Schwingen 15, 16 in den Langlöchern 23, 24 sowie durch eine Winkelverstellung der Rückenlehne 3 und der Seitenteile 2, 5 können für Kinder unterschiedlicher Altersstufen optimale Verhältnisse eingestellt werden. Für eine möglichst kindgerechte Einstellung der Rückhalteeinrichtung kann es auch zweckmäßig sein, das Rückhalteelement 4 längs verschiebbar zwischen den Seitenelementen 2, 5 anzuordnen. Dadurch kann sichergestellt werden, daß einerseits für das Kind genügend Bewegungsfreiheit verbleibt und andererseits bei einem Fahrzeugunfall möglichst früh und anatomisch günstig eine Rückhaltewirkung eintritt. Aus Komfortgründen ist bei dem in der Zeichnung dargestellten Ausführungsbeispiel noch eine Fußraste 38 vorgesehen, die über ein Schubdrehgelenk 39 an das Sitzkissen gekoppelt und in diesem zumindest teilweise versenkbar ist.

Die auf der Rückseite der Rückenlehne 3 vorgesehenen Lehnenwangen 32, 33 gewährleisten bei einem Seitenaufprall eine gute Abstützung des Kindes auch im Oberkörper- und Kopfbereich. Damit ist das Kind also bei Unfällen jeglicher Art nach allen Richtungen hin gut abgestützt. Insbesondere bei den am häufigsten vorkommenden Frontalaufprallunfällen wird das Kind großflächig über die gesamte Länge seines Rückens und damit anatomisch günstig aufgefangen. Die Figuren 2 und 3 zeigen, daß für die Umwandlung des Fahrzeugsitzes in eine Rückhalteeinrichtung kein erhöhter Raumbedarf besteht. Für keine der zuvor beschriebenen Bewegungen müssen Teile aus dem in der Figur 1 ersichtlichen Grundriß herausbewegt werden.

Für die Rückverwandlung der Rückhalteeinrichtung in die in Figur 2 dargestellte Ausgangsstellung sind die zuvor beschriebenen Betätigungen in umgekehrter Reihenfolge durchzuführen. Die Längsverschiebbarkeit der Schwingen 15, 16 erlaubt dann auch für Erwachsene eine optimale Anpassung der Sitzkissengröße an die Oberschenkellänge.

Die Erfindung ist nicht auf das in der Zeichnung dargestellte Ausführungsbeispiel beschränkt. So ist es beispielsweise denkbar, auch den Gelenkstangen 7 und 8 eine Schiebekulisse zuzuordnen, in die die Bolzen 30, 31 eingreifen. Bei der Verstellung der Rückenlehne werden dann gleichzeitig mit der Verschwenkung des Sitzkissens die Seitenteile 2, 5 aus der Sitzkontur herausbewegt. Auf diese Weise wird die Handhabung des Fahrzeugsitzes 1 noch wesentlich erleichtert. In einer kinematischen Abwandlung des vorhin geschilderten Prinzips ist es auch möglich, als Mitnahmeelemente den Schiebekulissen individuell zugeordnete Bolzen im Längsträger und in den Gelenkstangen 7, 8 vorzusehen. Ein besonderer Komfort für die Umwandlung des erfindungsgemäßen Fahrzeugs kann dann geboten werden, wenn die zu verstellenden Elemente mit einem elektromotorischen Antrieb verbunden sind. Über eine den elektrischen Antrieben zugeordnete Steuereinrichtung können dann beispielsweise verschiedene Einstellungen programmiert und je nach Größe des unterzubringenden Kindes bedarfsweise abgerufen werden.

Das in der Zeichnung dargestellte Ausführungsbeispiel ist besonders geeignet für die Verwendung als Beifahrer-Vordersitz. Allerdings ist die Erfindung nicht auf Vordersitze beschränkt. Es ist bei einer entsprechenden Gestaltung des Sitzrahmens 21 auch möglich, Rücksitzbänke nach dem Erfindungsprinzip zu gestalten.

## Patentansprüche

1. Sitz (1) für ein Fahrzeug mit einem mehrteiligen Sitzkissen und einer Rückenlehne (3) sowie mit einer aus der Sitzkontur herausbewegbaren und aus Sitzkissenteilen gebildeten Rückhalteeinrichtung für ein auf der Restsitzfläche (6) mitgeführtes Kind, wobei die Rückhalteeinrichtung im wesentlichen zwei Seitenteile (2, 5) aufweist, welche durch ein Rückhalteelement (4) verbunden sind, dadurch gekennzeichnet, daß zur Unterbringung des Kindes in einer der normalen Sitzposition entgegengesetzten Richtung die Rückenlehne (3) aus ihrer in einem hinteren Bereich des Sitzes vorgesehenen Ausgangsstellung heraus in einen vorderen Bereich des Sitzkissens verstellbar und mit Mitteln (Bolzen 30, 31; Schiebekulissen 28, 29) verbunden ist, durch die während ihrer Verstellung wenigstens die Restsitzfläche (6) und/oder wenigstens ein Element der Rückhalteeinrichtung (Seitenteile 2, 5; Rückhalteelement 4) in Richtung Kindersitzposition bewegbar ist.

2. Sitz nach Anspruch 1, dadurch gekennzeichnet, daß die Rückenlehne (3) über Drehgelenke (Gelenkbeschläge 17, 19) mit einer Schwingenanordnung (Schwingen 15, 16) verbunden ist, die ihrerseits an einem das Sitzkissen tragenden Sitzrahmen (21) angelenkt ist.

3. Sitz nach Anspruch 2, dadurch gekennzeichnet, daß die Anlenkpunkte (Gelenkbeschläge 18, 20) der Schwingenanordnung (Schwingen 15, 16) im Sitzrahmen (21) in einer Längsführung (Langlöcher 23, 24) verschiebbar und in den jeweiligen Schiebepositionen arretierbar sind.

4. Sitz nach Anspruch 1, dadurch gekennzeichnet, daß das Sitzkissen um eine quer zum Sitz (1) verlaufende Achse (22) schwenkbar ist.

5. Sitz nach den Ansprüchen 2 bis 4, dadurch gekennzeichnet, daß die Mittel durch wenigstens ein an der Schwingenanordnung (Schwingen 15, 16) befestigtes erstes Mitnahmeelement (Bolzen 30, 31) und eine dem Sitzkissen zugeordnete erste Schiebekulisse (28, 29), in der das erste Mitnahmeelement (Bolzen 30, 31) verschiebbar und in vorgegebenen Schiebepositionen arretierbar ist, gebildet sind.

6. Sitz nach Anspruch 1, dadurch gekennzeichnet, daß die Seitenteile (2, 5) um eine zu der Achse (22) parallele Schwenkachse (11) bewegbar sind.

7. Sitz nach Anspruch 6, dadurch gekennzeichnet, daß die Schwenkachse (11) in dem vorderen Bereich des Sitzkissens angeordnet ist.

8. Sitz nach Anspruch 7, dadurch gekennzeichnet, daß die Mittel durch wenigstens ein an der Schwingenanordnung (Schwingen 15, 16) befestigtes zweites Mitnahmeelement und eine wenigstens einem Seitenteil (2, 5) zugeordnete zweite Schiebekulisse, in der das zweite Mitnahmeelement verschiebbar ist, gebildet sind.

9. Sitz nach den Ansprüchen 5 und 8, dadurch gekennzeichnet, daß das erste und zweite Mitnahmeelement zu einem Teil (Bolzen 30, 31) zusammengefaßt sind, so daß durch Verstellung der Rückenlehne (3) sowohl die Restsitzfläche (6) als auch die Seitenteile (2, 5) bewegbar sind.

10. Sitz nach wenigstens einem der Ansprüche 1 bis 9, dadurch gekennzeichnet, daß an der hinteren Seite der Rückenlehne (3) seitliche Lehnenwangen (32, 33) angeformt sind.

11. Sitz nach wenigstens einem der Ansprüche 1 bis 10, dadurch gekennzeichnet, daß zur Abstützung der Beine des Kindes aus der Sitzkontur eine Fußraste (38) herausbewegbar ist.

## Claims

1. Seat (1) for a motor vehicle having a multi-part seat cushion and a back-rest (3) as well as a retaining device which can be moved forward out of the contour of the seat and which is formed from parts of the seat cushion, which retaining device is intended for a child being transported on the remaining seat surface (6), wherein the retaining device comprises substantially two lateral parts (2, 5), which are connected by a retaining member (4), characterised in that for the purpose of accommodating the child in a direction opposite to the normal seated position the back-rest (3) can be displaced out of its original position provided in a rear region of the seat into a front region of the seat cushion and is connected by means (pins 30, 31; slide members 28, 29) of which during their adjustment at least the remaining seat surface (6) and/or at least one element of the retaining device (lateral parts 2, 5; retaining member 4) can be moved in the direction of the position of the child's seat.

2. Seat according to claim 1, characterised in that the back-rest (3) is connected by way of pivot joints (articulated fittings 17, 19) to a pivot arrangement (swivelling levers 15, 16), which for its part is articulated at a seat frame (21) supporting the seat cushion.

3. Seat according to claim 2, characterised in that articulated points ( articulated fittings 18, 20) of the pivot arrangement (swiveling levers 15, 16) can be displaced in the seat frame (21) in a longitudinal guide (elongated holes 23, 24) and can be locked in the respective slide positions.

4. Seat according to claim 1, characterised in that the seat cushion can pivot about an axis (22) extending transverse to the seat (1).

5. Seat according to claims 2 to 4, characterised in that the means are formed by at least a first entrainer member (pin 30, 31) attached to the pivot arrangement (swivelling levers 15, 16) and a first slide member (28, 29) associated with the seat cushion, in which slide member the first entrainer member (pin 30, 31) can be displaced and locked in the predetermined slide positions.

6. Seat according to claim 1, characterised in that the lateral parts (2, 5) can move about a pivot axis (11) which is parallel with the axis (22).

7. Seat according to claim 6, characterised in that the pivot axis (11) is disposed in the front region of the seat cushion.

8. Seat according to claim 7, characterised in that the means are formed by at least a second entrainer member attached to the pivot arrangement (swiveling levers 15, 16) and a second slide member associated with at least one lateral part (2, 5), in which slide member the second entrainer member can be displaced.

9. Seat according to claims 5 and 8, characterised in that the first and second entrainer member are combined to form one part (pin 30, 31) so that by adjusting the back-rest (3) both the remaining seat surface (6) and also the lateral parts (2,5) can be moved.

10. Seat according to at least one of claims 1 to 9, characterised in that lateral padded rests (32, 34) are formed as one at the rear side of the back-rest (3).

11. Seat according to at least one of claims 1 to 10, characterised in that a foot rest (38) for the purpose of supporting the legs of the child can be moved forward out of the contour of the seat.

## Revendications

1. Siège (1) pour un véhicule, comprenant un coussin de siège en plusieurs parties et un dossier (3), ainsi qu'un dispositif de retenue pour un enfant emmené sur la surface restante (6) du siège, ce dispositif pouvant être déployé hors des contours du siège et étant formé par des parties du coussin du siège, le dispositif de retenue comprenant essentiellement deux parties latérales (2, 5) reliées entre elles au moyen d'un élément de retenue (4), caractérisé en ce qu'afin de permettre l'installation de l'enfant dans un sens opposé à la position normale du siège, le dossier (3) peut être déplacé hors de sa position de départ prévue au niveau d'une partie arrière du siège, pour être ramené vers une partie avant du coussin du siège, et est relié à des moyens (axes 30, 31; coulisses 28, 29) permettant, pendant le déplacement du dossier, de déplacer au moins la surface restante (6) du siège et/ou au moins un élément du dispositif de retenue (parties latérales 2, 5; élément de retenue 4) en direction de la position définissant le siège pour enfant.

2. Siège selon la revendication 1, caractérisé en ce que le dossier (3) est articulé, au moyen d'articulations pivotantes (ferrures d'articulation 17, 19), sur un système de bras oscillants (bras oscillants 15, 16) qui est à son tour articulé sur un cadre de siège (21) portant le coussin du siège.

3. Siège selon la revendication 2, caractérisé en ce que les points d'articulation (ferrures d'articulation 18, 20) du système de bras oscillants (bras oscillants 15, 16) peuvent être déplacés dans le cadre (21) du siège, dans un guidage longitudinal (trous oblongs 23, 24) et peuvent être arrêtés dans les différentes positions de coulissement.

4. Siège selon la revendication 1, caractérisé en ce que le coussin du siège peut basculer autour d'un axe (22) s'étendant transversalement au siège (1).

5. Siège selon les revendications 2 à 4, caractérisé en ce que les moyens sont constitués par au moins un premier élément d'entraînement (axes 30, 31) fixé sur le système de bras oscillants (bras oscillants 15, 16) et par une première coulisse (28, 29) associée au coussin du siège, dans laquelle le premier élément d'entraînement (axes 30, 31) peut coulisser et peut être arrêté dans des positions prédéterminées de coulissement.

6. Siège selon la revendication 1, caractérisé en ce que les parties latérales (2, 5) sont mobiles autour d'un axe (11) de pivotement parallèle à l'axe (22).

7. Siège selon la revendication 6, caractérisé en ce que l'axe (11) de pivotement est disposé au niveau de la partie avant du coussin de siège.

8. Siège selon la revendication 7, caractérisé en ce que les moyens sont constitués par au moins un deuxième élément d'entraînement fixé sur le système de bras oscillants (bras oscillants 15, 16) et par une deuxième coulisse associée à l'une au moins des parties latérales (2, 5), coulisse dans laquelle le deuxième élément d'entraînement peut coulisser.

9. Siège selon les revendications 5 à 8, caractérisé en ce que les premier et deuxième éléments d'entraînement sont réunis en une seule pièce (axes 30, 31), de manière que le déplacement du dossier (3) entraîne à la fois le déplacement de la surface restante (6) du siège et celui des parties latérales (2, 5).

10. Siège selon l'une au moins des revendications 1 à 9, caractérisé en ce que des flancs latéraux (32, 33) du dossier sont formés sur la face arrière du dossier (3).

11. Siège selon l'une au moins des revendications 1 à 10, caractérisé en ce qu'un repose-pied (38) destiné à supporter les jambes de l'enfant peut être déployé hors des contours du siège.
